# EUROPEAN PATENT SPECIFICATION

(11) **EP 3 802 299 B1**
(45) Date of publication and mention of the grant of the patent: **19.07.2023**
(21) Application number: 19734896.4
(22) Date of filing: 29.05.2019
(51) Int. Cl.: B62J 17/04, B62J 17/10

(54) **RIDEABLE SADDLE VEHICLE WITH IMPROVED RIDE COMFORT WINDSHIELD**
AUFSITZSATTELFAHRZEUG MIT WINDSCHUTZSCHEIBE MIT VERBESSERTEM FAHRKOMFORT
VÉHICULE À SELLE ADAPTÉE À LA CIRCULATION AUTOMOBILE DOTÉ D'UN PARE-BRISE À CONFORT DE CONDUITE AMÉLIORÉ

(30) Priority: 30.05.2018 IT 201800005861
(43) Date of publication of application: 14.04.2021
(73) Proprietor: Piaggio & C. S.P.A., 56025 Pontedera Pisa (IT)
(72) Inventor: CAMINATI, Federico, 56025 Pontedera (PI) (IT)
(74) Representative: Carangelo, Pierluigi
(86) International application number: PCT/IB2019/054445
(87) International publication number: WO 2019/229669

(56) References cited:
- EP-A1- 2 019 029
- EP-A2- 1 495 954
- EP-A2- 2 082 951
- AU-A- 8 412 282

## Description

### TECHNICAL FIELD OF THE INVENTION

The present invention relates the technical field of ridable saddle vehicles, such as, for example, motorcycles, and relates, in particular, to a ridable saddle vehicle comprising a windshield.

### BACKGROUND OF THE INVENTION

Equipping a ridable saddle vehicle, in particular a motorcycle, or more in particular, a scooter, with a windshield is well known, to shield, at least partially, the driver from wind, rain and atmospheric agents. Generally, a windshield is fixed to the front shield of the ridable saddle vehicle, in particular, to an upper portion of the front shield.

In the ridable saddle vehicles of the background art, a drawback was found in that, during the motion of the vehicle, above all at high speeds, the air intercepted frontally by the windshield and deviated by it produces a turbulent air flow directed towards the helmet of the driver, which starts from the upper portion of the trailing edge of the windshield. This turbulent air flow has a negative impact on driving comfort, both because it exerts forces on the helmet and because it is a source of noise. Document EP2019029A1 shows the preamble of claim 1.

It is the object of the present description to produce a ridable saddle vehicle equipped with a windshield which is capable of solving or at least partially reducing the aforesaid drawback.

This and other objects are achieved by means of a ridable saddle vehicle as generally defined in claim 1. Preferred and advantageous embodiments of the aforesaid vehicle are defined in the accompanying dependent claims.

The invention will become more apparent from the following detailed description of particular embodiments thereof, made by way of explanation and, therefore, by no means, by way of limitation, in relation to the accompanying drawings, synthetically described in the following paragraph.

### BRIEF DESCRIPTION OF THE DRAWINGS

Figure 1 shows an axonometric view of an embodiment, given by way of explanation and not by way of limitation, of a ridable saddle vehicle comprising a front portion and a windshield fixed to the front portion of the vehicle;
Figure 2 shows a front view of the vehicle of Figure 1;
Figure 3 shows a side view in which the vehicle of Figure 1 and a driver of such vehicle are shown;
Figure 4 shows a perspective view of a part of the vehicle of Figure 1 and of the windshield;
Figure 5 shows a side sectional view of a part of the vehicle of Figure 1 and of the windshield along the axis of prevailing longitudinal extension of the vehicle;
Figure 6 shows a top view of the vehicle of Figure 1.

### DETAILED DESCRIPTION

The following description of one or more embodiments of the invention relates to the accompanying drawings. The same reference numerals in the drawings identify the same or similar elements. The drawings are not necessarily shown in scale. Furthermore, the following detailed description must not be considered limiting of the invention itself. The object of the invention is defined by the attached claims. The technical details, the structures or the features of the solutions described below may be combined with one another in any manner, unless it is explicitly indicated that some features or solutions are alternatives to one another, or it is not evident from the following description that two or more features or embodiments are incompatible with one another.

In the following description, unless otherwise indicated, the terms "upper", "lower" or similar terms are to be intended as referring to the motorcycle 1 in a normal use condition in which the motorcycle is in a vertical position.

It should also be noted that, for the purposes of the present description, the term "windshield" is to be intended generally, so as to comprise, for example, a so-called "windscreen fairing", which is conventionally smaller with respect to a common windshield, and is constructed to withstand air pressure at speeds higher with respect to the speeds for which a common windshield is designed.

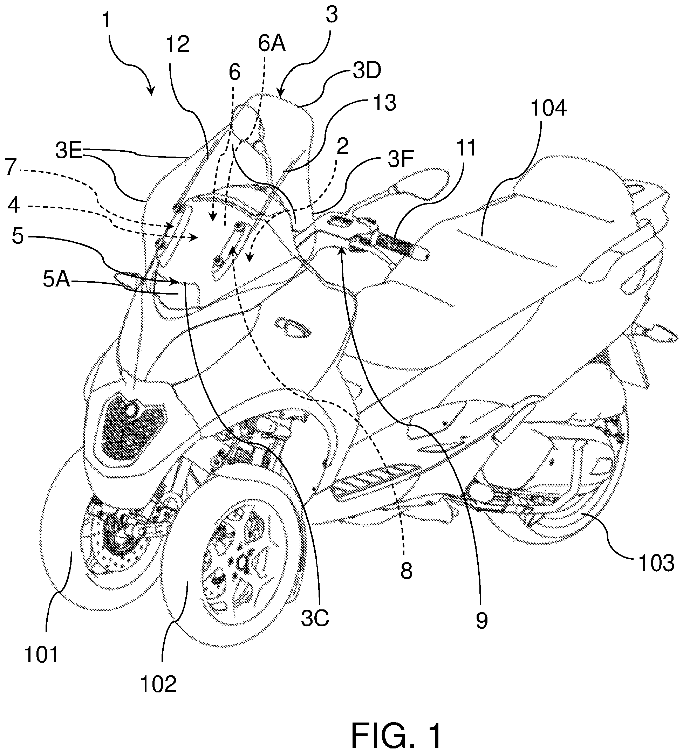

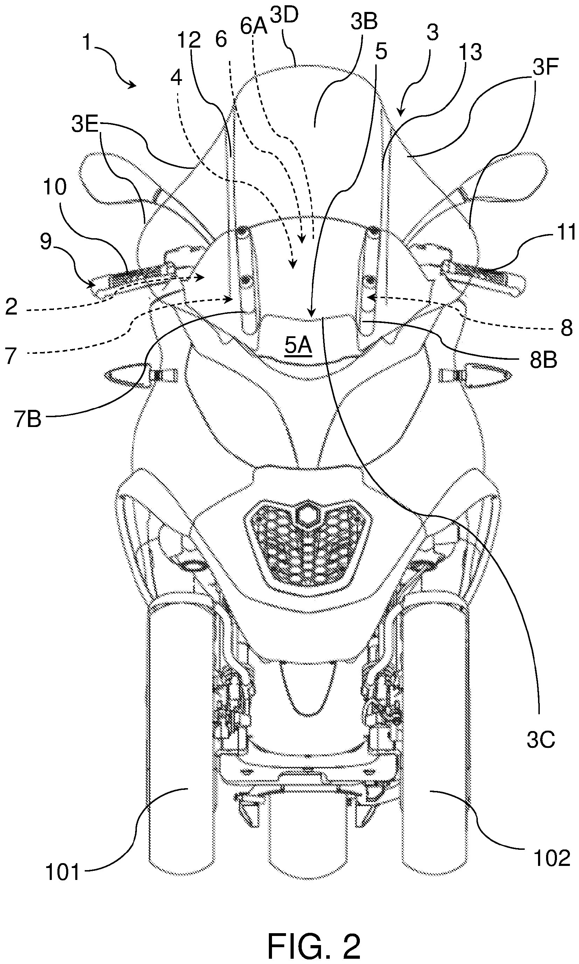

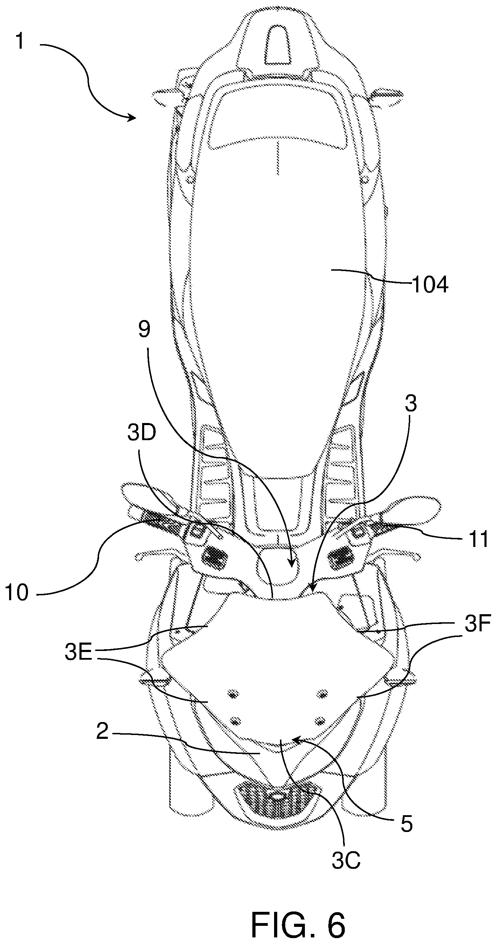

The accompanying Figures 1-6 show an embodiment of a ridable saddle vehicle 1. In particular, the vehicle 1 is a motorcycle 1, and more in particular a scooter 1. The example shown in the Figures shows, in particular, an embodiment of a motorcycle 1 which takes the form, without however introducing any limitation, of a three-wheel motorcycle or tricycle, comprising two front steerable wheels 101, 102 and one rear wheel 103.

Henceforth, in the present description reference will be made to a generic ridable saddle vehicle 1, also more simply indicated as a motorcycle 1, thereby meaning that the description of the following is generally applicable to any type of vehicle 1 comprising:
- a supporting structure;
- at least two wheels 101, 103 directly or indirectly constrained to the supporting structure;
- a traction motor, for example, thermal or electric or hybrid, constrained to the supporting structure and operatively connected to at least one of the two wheels 101, 103;
- a ridable saddle 104 fixed to the supporting structure.
In other words, it should be noted that the teachings of the present description are generally applicable to all ridable saddle vehicles with two, three, four or more wheels to which a windshield may be applied, such as, for example, and not by way of limitation, motorcycles, mopeds, scooters , all terrain vehicles (ATVs), etc.

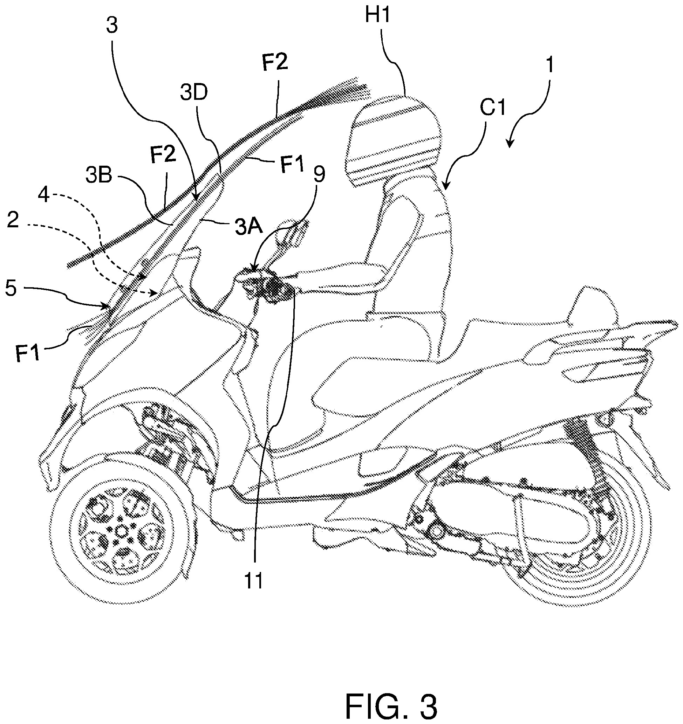

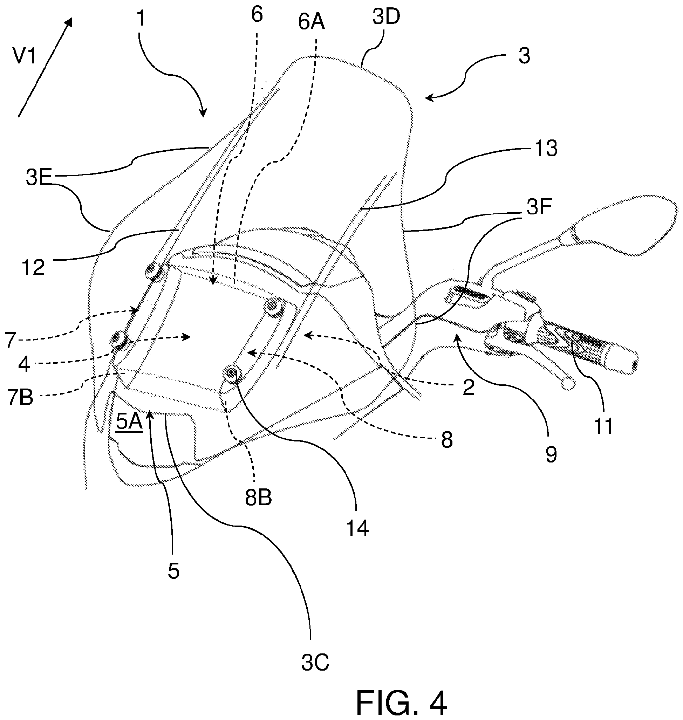

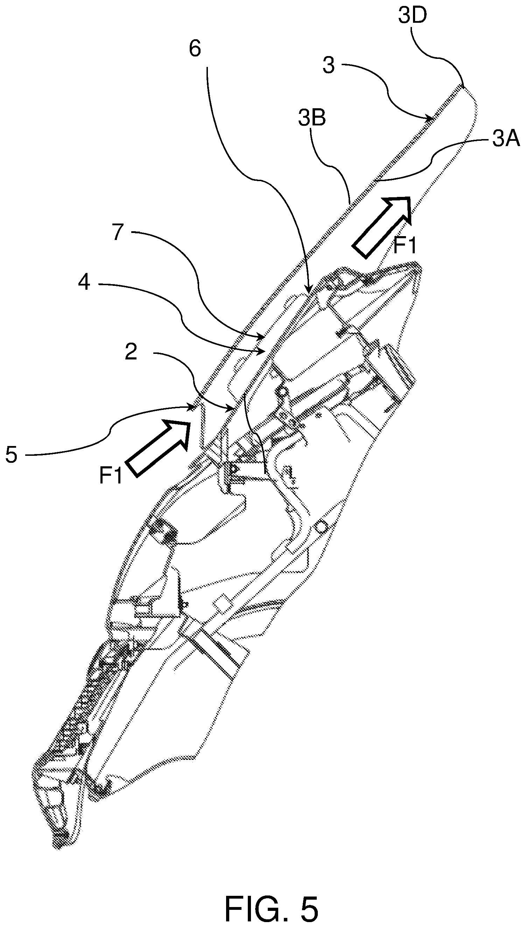

The motorcycle 1 comprises a front portion 2 and a windshield 3 fixed to the front portion 2. Preferably, the front portion 2 is a part of the body of the motorcycle 1 and more preferably is a portion of the aforesaid front shield of the motorcycle 1. As known, the front shield is configured to cover at least part of the front side of the motorcycle 1. In accordance with a preferred embodiment, the windshield 3 comprises an inner face 3A facing the front portion 2 and an opposite outer face 3B, a lower edge 3C, an opposite upper edge 3D and a pair of side edges 3E, 3F joining, respectively, the aforesaid lower and upper edges 3C, 3D. Preferably, the windshield 3 is fixed to the front portion 2 in a removable manner, preferably by means of fixing screws 14 (Figure 4), for example, by means of four fixing screws 14 as in the example. More in particular, the windshield 3 is fixed to the front portion 2 so that the windshield has a fixed predetermined inclination. In other words, the motorcycle 1 does not comprise elements for adjusting the inclination of the windshield 3 in various positions. The front portion 2 and the windshield 3 are configured so as to define a duct 4 therebetween for conveying air configured to be passed through an air flow F1 (the air flow F1 is shown by means of the lines in Figure 3 and by means of the arrows in Figure 5) during the motion of the motorcycle 1. The duct 4 comprises, in particular, an inlet port 5 configured to direct the air flow F1 into the duct 4. Furthermore, the duct 4 comprises an outlet port 6 configured to allow the outflow of the air flow F1 from the duct 4 itself. Preferably, the inlet and outlet ports 5, 6 are arranged centrally with respect to the front portion 2 of the motorcycle 1 and to the windshield 3. Preferably, the inlet port 5 is defined at least partially by the aforesaid lower edge 3C of the windshield 3. The inlet port 5 and the outlet port 6 comprise, respectively, an inlet section 5A and an outlet section 6A. In particular, the inlet section 5A is greater than the outlet section 6A. In accordance with a convenient embodiment, the lower edge 3C of the windshield 3 is shaped so as to concentrate the air flow F1 towards the inlet section 5A of the duct 4. It should be noted that the term "duct", employed to define the duct 4, is to be intended generally. In other words, the duct 4 is a channeling adapted to direct a prevailing portion of the air flow F1 which enters through the inlet port 5. Again in other words, the duct 4 is not necessarily a completely hermetic duct according to a direction orthogonal to the prevailing direction of the flow F1. Therefore, a portion of the air flow F1 may, for example, escape laterally from the duct 4 in case spaces are there through which a portion of the air flow F1 may pass. It should also be noted that the term "section" employed to define a part of the duct 4, and, in particular, the inlet section 5A and the outlet section 6A, indicates a passage area of the duct 4 which is orthogonal to the prevailing direction of the air flow F1. Preferably, the inlet section 5A is a free section, i.e. a passage area without grids or other elements which may hinder or determine the load losses in the air flow F1. Preferably, also the outlet section 6A is a free section.

In accordance with a preferred embodiment, the duct 4 is a converging duct 4. In particular, the duct 4 converges in a direction, indicated by the arrow V1 in Figure 4, from the inlet port 5 to the outlet port 6.

It should be noted that the fact of providing a duct 4 having the inlet section 5A greater than the outlet section 6A, and more preferably the fact of making the duct 4 so that it is a converging duct as described above, allows to accelerate the air flow F1. Thereby, the air flow F1 is capable of deviating an air flow F2 (Figure 3) which laps the outer face 3B of the windshield 3 so that the flow lines of the flow F2 are more adherent to the windshield 3 at the trailing edge, i.e., the upper edge 3D of the windshield 3. This advantageously allows to reduce the turbulence and consequently the thrust effects and the undesired noises at the helmet H1 of the driver C1 during the driving of the motorcycle 1, considerably improving the driving comfort even at high speeds, such as, for example, speeds of around 90km/h or above.

In accordance with a preferred embodiment, the duct 4 is configured so as to convey the air flow F1 outflowing from the outlet section 6A upwards, tangentially, or substantially tangentially, to the inner face 3A of the windshield 3. This advantageously allows a better upwards deviation of the air flow F2 and therefore improves the turbulence reduction effects at the helmet H1 of the driver C1.

In accordance with a preferred embodiment, the front portion 2 of the motorcycle 1 comprises two protruding fixing supports 7, 8 to which the windshield 3 is fixed. In particular, the duct 4 is defined at the bottom by the front portion 2, at the top by the inner face 3A of the windshield 3 and at the sides by the fixing supports 7, 8. Preferably, the protruding fixing supports 7, 8 are arranged parallel to one another. Alternatively, the protruding fixing supports 7, 8 may be arranged so as to diverge in the direction V1, and more in particular so as to diverge laterally with respect to the direction V1. In such case, preferably, the protruding fixing supports 7, 8 diverge from one another so as to convey the air flow F1 towards the whole, or substantially the whole, upper edge 3D of the windshield 3. This advantageously allows to more uniformly distribute the air flow F1 outflowing from the outlet port 6 onto the helmet H1 of the driver C1 and therefore to more uniformly distribute the thrust on the helmet H1 itself with consequent positive effects on driving comfort.

In accordance with an embodiment, the protruding fixing supports 7, 8 each have a front portion 7B, 8B proximal to the inlet port 5 which is shaped so as to form a channel for directing the air flow F1. In accordance with an embodiment, the front portion 7B, 8B of each of the protruding fixing supports 7, 8 is placed at a predetermined distance from the inner face 3A of the windshield 3 so as to allow a portion of the air flow F1 to be directed towards a pair of handles 10, 11 of the handlebar 9 of the motorcycle 1. Thereby, a portion of the air flow F1 may be directed between the inner face 3A of the windshield 3 and the front portions 7B, 8B of the protruding fixing supports 7, 8 by deviating an air flow which laps the outer face 3B of the windshield 3 in a direction transversal with respect to the flow F2, so as to reduce the turbulence in the area which affects the hands and forearms of the driver C1. Thereby, the driving comfort of the motorcycle 1 is further improved.

In accordance with a preferred embodiment, as mentioned above, the front portion 2 of the motorcycle 1 is a portion of the front shield of the motorcycle 1 and the protruding fixing supports 7, 8 and the front portion 2 are connected to one another in a single piece. In other words, the protruding fixing supports 7, 8 and the front portion 2 are preferably made in a single piece. This conveniently allows to reduce the side losses of the air flow F1, maximizing the positive effects on driving comfort of the flow F1 described above.

In accordance with an embodiment, the side edges 3E, 3F of the windshield 3 are shaped laterally so as to form at least partially a pair of handguards. In this regard, the Applicant has found that, although such shaping of the side edges 3E, 3F causes a separation of the air flow lapping the outer face 3B of the windshield on the trailing edge corresponding to the aforesaid pair of handguards and an increase in turbulence downstream of such trailing edge, advantageously the increase in turbulence occurs in an area which does not affect the area of the hands and forearms of the driver C1. Thereby, the driving comfort of the motorcycle 1 is further improved.

In accordance with an embodiment, the windshield 3 comprises a pair of longitudinal stiffening folds 12, 13 extending from the lower edge 3C towards the upper edge 3D of the windshield 3. It should be noted that the folds 12, 13 are folds which do not form steps but rather folds which gradually join two portions of the windshield 3 and which have a rounded section.

On the basis of what has been described above, it is therefore possible to understand how a ridable saddle vehicle of the type described above allows to achieve the aforementioned objects with reference to the background art.

Without prejudice to the principle of the invention, the embodiments and embodiment details may be widely varied with respect to what has been described and shown purely by way of non-limiting example, without departing from the scope of the invention as defined in the accompanying claims.

## Claims

1. A ridable saddle vehicle (1) comprising a front portion (2) of said vehicle and a windshield (3) fixed to said front portion (2), the front portion (2) and the windshield (3) being configured so as to define a duct (4) therebetween for conveying air, configured to be passed through by an air flow (F1) during the motion of said vehicle (1), said duct (4) comprising an inlet port (5) configured to direct the air flow (F1) into said duct (4) and an outlet port (6) configured to allow the outflow of the air flow (F1) from said duct (4), the inlet port (5) and the outlet port (6) having, respectively, an inlet section (5A) and an outlet section (6A);
wherein the windshield (3) comprises an inner face (3A) facing said front portion (2) and an opposite outer face (3B), a lower edge (3C), an opposite upper edge (3D) and a pair of side edges (3E, 3F) joining said lower and upper edges (3C, 3D), and wherein said inlet port (5) is defined, at least partially, by said lower edge (3C) of the windshield (3);
wherein the front portion (2) of said vehicle (1) comprises two protruding fixing supports (7, 8) to which the windshield (3) is fixed, said duct (4) being defined at the bottom by said front portion (2), at the top by the inner face (3A) of the windshield (3) and at the sides by said fixing supports (7, 8); **characterized by** the inlet section (5A) being greater than the outlet section (6A).

2. Vehicle (1) according to claim 1, wherein said duct (4) is a duct converging in a direction from the inlet port (5) to the outlet port (6).

3. Vehicle (1) according to claim 1 or 2, wherein said duct (4) is configured so as to convey the air flow (F1) outflowing from the outlet section (6A) upwards, tangentially, or substantially tangentially, to said inner face (3A) of the windshield (3).

4. Vehicle (1) according to claim 1, wherein said protruding fixing supports (7, 8) are arranged parallel to one another, or so as to diverge in the direction from the inlet port (5) to the outlet port (6).

5. Vehicle (1) according to claim 4, wherein said protruding fixing supports (7, 8) are divergent from one another, so as to convey the air flow (F1) towards the whole, or substantially the whole, upper edge (3D) of the windshield (3).

6. Vehicle (1) according to any one of claims 1 to 5, wherein said protruding fixing supports (7, 8) each have a front portion (7B, 8B) proximal to the inlet port (5) which is shaped so as to form a channel for directing the air flow (F1).

7. Vehicle (1) according to claim 6, comprising a handlebar (9) including a pair of handles (10, 11), wherein the front portion (7B, 8B) of each of said protruding fixing supports (7, 8) is placed at a predetermined distance from the inner face (3A) of the windshield (3) so as to allow a portion of the air flow (F1) to be directed towards said handles (10, 11).

8. Vehicle (1) according to any one of claims 1 to 7,wherein said front portion (2) of the vehicle is a portion of a front shield, configured to cover at least part of the front side of said vehicle (1), and wherein the protruding fixing supports (7, 8) and the front portion (2) are made in a single piece.

9. Vehicle (1) according to any one of claims 1 to 8, wherein the side edges (3E, 3F) of the windshield (3) are shaped laterally, so as to form, at least partially, a pair of handguards.

10. Vehicle (1) according to any one of claims 1 to 9, wherein the windshield (3) comprises a pair of longitudinal stiffening folds (12, 13) extending from the lower edge (3C) towards the upper edge (3D) of the windshield (3).

11. Vehicle (1) according to any one of the preceding claims, wherein said inlet and outlet ports (5, 6) are arranged centrally with respect to the front portion (2) of said vehicle and to the windshield (3).

12. Vehicle (1) according to any one of claims 1 to 11 ,wherein said lower edge (3C) of the windshield (3) is shaped so as to concentrate the air flow (F1) towards the inlet section (5A) of the duct (4).

13. Vehicle (1) according to any one of the preceding claims, wherein said vehicle is a motorcycle (1).

## Patentansprüche

1. Aufsitzsattelfahrzeug (1), das einen Vorderabschnitt (2) des Fahrzeugs und eine Windschutzscheibe (3) umfasst, die an dem Vorderabschnitt (2) befestigt ist, wobei der Vorderabschnitt (2) und die Windschutzscheibe (3) so konfiguriert sind, dass sie dazwischen einen Kanal (4) zum Leiten von Luft definieren, der so konfiguriert ist, dass er während der Bewegung des Fahrzeugs (1) von einem Luftstrom (F1) durchströmt wird, wobei der Kanal (4) eine Einlassöffnung (5), die so konfiguriert ist, den Luftstrom (F1) in den Kanal (4) zu lenken, und eine Auslassöffnung (6) umfasst, die so konfiguriert ist, das Ausströmen des Luftstroms (F1) aus dem Kanal (4) zu ermöglichen, wobei die Einlassöffnung (5) und die Auslassöffnung (6) jeweils einen Einlassabschnitt (5A) und einen Auslassabschnitt (6A) aufweisen;
wobei die Windschutzscheibe (3) eine dem Vorderabschnitt (2) zugewandte Innenfläche (3A) und eine gegenüberliegende Außenfläche (3B), eine Unterkante (3C), eine gegenüberliegende Oberkante (3D) und ein Paar Seitenkanten (3E, 3F) umfasst, das die Unter- und Oberkanten (3C, 3D) verbindet, und wobei die Einlassöffnung (5) zumindest teilweise durch die Unterkante (3C) der Windschutzscheibe (3) definiert ist;
wobei der Vorderabschnitt (2) des Fahrzeugs (1) zwei vorstehende Befestigungsstützen (7, 8) umfasst, an denen die Windschutzscheibe (3) befestigt ist, wobei der Kanal (4) unten durch den Vorderabschnitt (2), oben durch die Innenfläche (3A) der Windschutzscheibe (3) und an den Seiten durch die Befestigungsstützen (7, 8) definiert ist; **dadurch gekennzeichnet, dass** der Einlassabschnitt (5A) größer ist als der Auslassabschnitt (6A).

2. Fahrzeug (1) nach Anspruch 1, wobei der Kanal (4) ein Kanal ist, der in einer Richtung von der Einlassöffnung (5) zu der Auslassöffnung (6) zusammenläuft.

3. Fahrzeug (1) nach Anspruch 1 oder 2, wobei der Kanal (4) so konfiguriert ist, dass er den aus dem Auslassabschnitt (6A) ausströmenden Luftstrom (F1) nach oben, tangential oder im Wesentlichen tangential zu der Innenfläche (3A) der Windschutzscheibe (3) leitet.

4. Fahrzeug (1) nach Anspruch 1, wobei die vorstehenden Befestigungsstützen (7, 8) parallel zueinander oder so angeordnet sind, dass sie in der Richtung von der Einlassöffnung (5) zu der Auslassöffnung (6) auseinanderlaufen.

5. Fahrzeug (1) nach Anspruch 4, wobei die vorstehenden Befestigungsstützen (7, 8) voneinander auseinanderlaufend sind, um den Luftstrom (F1) in Richtung der gesamten oder im Wesentlichen gesamten Oberkante (3D) der Windschutzscheibe (3) zu leiten.

6. Fahrzeug (1) nach einem der Ansprüche 1 bis 5, wobei die vorstehenden Befestigungsstützen (7, 8) jeweils einen Vorderabschnitt (7B, 8B) in der Nähe der Einlassöffnung (5) aufweisen, der so geformt ist, dass er eine Rinne zum Lenken des Luftstroms (F1) bildet.

7. Fahrzeug (1) nach Anspruch 6, umfassend einen Lenker (9) beinhaltend ein Paar Griffe (10, 11), wobei der Vorderabschnitt (7B, 8B) jeder der vorstehenden Befestigungsstützen (7, 8) in einem vorbestimmten Abstand von der Innenfläche (3A) der Windschutzscheibe (3) platziert ist, um zu ermöglichen, dass ein Teil des Luftstroms (F1) auf die Griffe (10, 11) gelenkt wird.

8. Fahrzeug (1) nach einem der Ansprüche 1 bis 7, wobei der Vorderabschnitt (2) des Fahrzeugs ein Abschnitt einer Vorderscheibe ist, die so konfiguriert ist, dass sie zumindest einen Teil der Vorderseite des Fahrzeugs (1) abdeckt, und wobei die vorstehenden Befestigungsstützen (7, 8) und der Vorderabschnitt (2) einstückig hergestellt sind.

9. Fahrzeug (1) nach einem der Ansprüche 1 bis 8, wobei die Seitenkanten (3E, 3F) der Windschutzscheibe (3) seitlich geformt sind, um zumindest teilweise ein Paar Handschützer zu bilden.

10. Fahrzeug (1) nach einem der Ansprüche 1 bis 9, wobei die Windschutzscheibe (3) ein Paar Längsversteifungsfalten (12, 13) umfasst, das sich von der Unterkante (3C) in Richtung der Oberkante (3D) der Windschutzscheibe (3) erstreckt.

11. Fahrzeug (1) nach einem der vorangehenden Ansprüche, wobei die Einlass- und Auslassöffnungen (5, 6) in Bezug auf den Vorderabschnitt (2) des Fahrzeugs und die Windschutzscheibe (3) mittig angeordnet sind.

12. Fahrzeug (1) nach einem der Ansprüche 1 bis 11, wobei die Unterkante (3C) der Windschutzscheibe (3) so geformt ist, dass sie den Luftstrom (F1) in Richtung des Einlassabschnitts (5A) des Kanals (4) konzentriert.

13. Fahrzeug (1) nach einem der vorangehenden Ansprüche, wobei das Fahrzeug ein Motorrad (1) ist.

## Revendications

1. Véhicule à selle (1) pouvant être enfourché, comprenant une partie avant (2) dudit véhicule et un pare-brise (3) fixé à ladite partie avant (2), la partie avant (2) et le pare-brise (3) étant conçus de manière à définir un conduit (4) entre eux pour transporter de l'air, conçu pour être traversé par un flux d'air (F1) pendant le mouvement dudit véhicule (1), ledit conduit (4) comprenant un orifice d'entrée (5) conçu pour diriger le flux d'air (F1) dans ledit conduit (4) et un orifice de sortie (6) conçu pour permettre la sortie du flux d'air (F1) dudit conduit (4), l'orifice d'entrée (5) et l'orifice de sortie (6) ayant, respectivement, une section d'entrée (5A) et une section de sortie (6A) ;
dans lequel le pare-brise (3) comprend une face interne (3A) faisant face à ladite partie avant (2) et une face externe opposée (3B), un bord inférieur (3C), un bord supérieur opposé (3D) et une paire de bords latéraux (3E, 3F) joignant lesdits bords inférieur et supérieur (3C, 3D) et dans lequel ledit orifice d'entrée (5) est défini, au moins partiellement, par ledit bord inférieur (3C) du pare-brise (3) ;
dans lequel la partie avant (2) dudit véhicule (1) comprend deux supports de fixation saillants (7, 8) auxquels le pare-brise (3) est fixé, ledit conduit (4) étant défini en bas par ladite partie avant (2), en haut par la face interne (3A) du pare-brise (3) et sur les côtés par lesdits supports de fixation (7, 8) ; **caractérisé en ce que** la section d'entrée (5A) est supérieure à la section de sortie (6A).

2. Véhicule (1) selon la revendication 1, dans lequel ledit conduit (4) est un conduit convergeant dans une direction allant de l'orifice d'entrée (5) à l'orifice de sortie (6).

3. Véhicule (1) selon la revendication 1 ou 2, dans lequel ledit conduit (4) est conçu de manière à véhiculer le flux d'air (F1) sortant de la section de sortie (6A) vers le haut, tangentiellement ou sensiblement tangentiellement à ladite face interne (3A) du pare-brise (3).

4. Véhicule (1) selon la revendication 1, dans lequel lesdits supports de fixation saillants (7, 8) sont agencés parallèlement l'un à l'autre ou de manière à diverger dans la direction allant de l'orifice d'entrée (5) à l'orifice de sortie (6).

5. Véhicule (1) selon la revendication 4, dans lequel lesdits supports de fixation saillants (7, 8) sont divergents l'un de l'autre, de manière à véhiculer le flux d'air (F1) vers la totalité ou sensiblement la totalité du bord supérieur (3D) du pare-brise (3).

6. Véhicule (1) selon l'une quelconque des revendications 1 à 5, dans lequel lesdits supports de fixation saillants (7, 8) ont chacun une partie avant (7B, 8B) proximale à l'orifice d'entrée (5) qui est conformée de manière à former un canal d'orientation du flux d'air (F1).

7. Véhicule (1) selon la revendication 6, comprenant un guidon (9) incluant une paire de poignées (10, 11), dans lequel la partie avant (7B, 8B) de chacun desdits supports de fixation saillants (7, 8) est placée à une distance prédéterminée de la face interne (3A) du pare-brise (3), de manière à permettre qu'une partie du flux d'air (F1) soit dirigée vers lesdites poignées (10, 11).

8. Véhicule (1) selon l'une quelconque des revendications 1 à 7, dans lequel ladite partie avant (2) du véhicule est une partie d'un bouclier avant, conçu pour couvrir au moins une partie du côté avant dudit véhicule (1) et dans lequel les supports de fixation saillants (7, 8) et la partie avant (2) sont réalisés en une seule pièce.

9. Véhicule (1) selon l'une quelconque des revendications 1 à 8, dans lequel les bords latéraux (3E, 3F) du pare-brise (3) sont conformés latéralement, de manière à former, au moins partiellement, une paire de protège-mains.

10. Véhicule (1) selon l'une quelconque des revendications 1 à 9, dans lequel le pare-brise (3) comprend une paire de plis longitudinaux de raidissement (12, 13) s'étendant du bord inférieur (3C) vers le bord supérieur (3D) du pare-brise (3).

11. Véhicule (1) selon l'une quelconque des revendications précédentes, dans lequel lesdits orifices d'entrée et de sortie (5, 6) sont agencés de manière centrale par rapport à la partie avant (2) dudit véhicule et au pare-brise (3).

12. Véhicule (1) selon l'une quelconque des revendications 1 à 11, dans lequel ledit bord inférieur (3C) du pare-brise (3) est conformé de manière à concentrer le flux d'air (F1) vers la section d'entrée (5A) du conduit (4).

13. Véhicule (1) selon l'une quelconque des revendications précédentes, dans lequel ledit véhicule est une motocyclette (1).
